# EUROPÄISCHE PATENTANMELDUNG

(11) **EP 4 541 520 A1**
(43) Veröffentlichungstag der Anmeldung: **23.04.2025**
(21) Anmeldenummer: 24199832.7
(22) Anmeldetag: 11.09.2024
(51) Int. Cl.: B25J 9/16

(54) **VERFAHREN ZUM HANDHABEN EINES GREIFOBJEKTS MITTELS EINER HANDHABUNGSANLAGE UMFASSEND EINEN ENDEFFEKTOR SOWIE HANDHABUNGSANLAGE**

(30) Priorität: 20.10.2023 DE 102023128963
(71) Anmelder: J. Schmalz GmbH, 72293 Glatten (DE)
(72) Erfinder: Schaaf, Walter, 72250 Freudenstadt-Grüntal (DE); Eberhardt, Tobias, 72293 Glatten (DE); Krieg, Steffen, 71111 Waldenbuch (DE)
(74) Vertreter: DREISS Patentanwälte PartG mbB

(57) **Zusammenfassung**

Die Erfindung betrifft ein Verfahren zum Handhaben eines Greifobjekts (14) mittels einer Handhabungsanlage (10) umfassend einen Endeffektor (12), einen Manipulator (16), eine Markierungseinrichtung (22) zum Markieren des Greifobjekts, und eine Detektionseinrichtung (28) zum Detektieren der Markierung auf dem Greifobjekt, das Verfahren umfassend Aufnehmen des Greifobjekts mittels des Endeffektors, Markieren des Greifobjekts mittels der Markierungseinrichtung, Ablegen des Greifobjekts an einem Ablageort, und Wiederaufnehmen des Greifobjekts mittels des Endeffektors, umfassend Detektieren der Markierung mittels der Detektionseinrichtung, Ausrichten des Endeffektors relativ zu der Markierung und Greifen des Greifobjekts mittels des Endeffektors. Die Erfindung betrifft auch eine Handhabungsanlage und einen Endeffektor.

## Beschreibung

Die Erfindung betrifft ein Verfahren zum Handhaben eines Greifobjekts mittels einer Handhabungsanlage umfassend einen Endeffektor zum Greifen des Greifobjekts und einen Manipulator zum Verlagern des Endeffektors. Die Erfindung betrifft auch eine solche Handhabungsanlage sowie einen Endeffektor.

Handhabungsanlagen sind aus dem Stand der Technik in vielfältiger Art und Weise bekannt und finden beispielsweise in Produktionsumgebungen Verwendung, um Werkstücke zwischen zwei Lagerorten oder einem Lagerort und einer Bearbeitungsmaschine zu transportieren. Derartige Handhabungsvorgänge umfassen üblicherweise das Greifen des Werkstücks (bspw. aus einem Lagerort), das Ablegen des Werkstücks (bspw. an einem anderen Lagerort oder an einer Bearbeitungsstation einer Bearbeitungsmaschine) und das anschließende erneute Wiederaufnehmen des Werkstücks (bspw. um es aus dem Lagerort einem Verpackungsprozess zuzuführen oder nach erfolgter Bearbeitung in der Bearbeitungsmaschine einem Lagerort zuzuführen).

Bei dem erneuten Aufnehmen des Werkstücks besteht oftmals das Problem, dass das Werkstück nicht mehr an der exakt gleichen Position gegriffen wird, was in bestimmten Anwendungssituationen zu Problemen führen kann, bspw. dann, wenn das Werkstück mehrere aufeinanderfolgende Bearbeitungsprozesse durchlaufen soll.

Um diesem Problem zu begegnen, wurde vorgeschlagen, das Werkstück in eine zentrierende Vorrichtung abzulegen oder mit optischer Sensorik eine Kontur oder Geometrie des Werkstücks zu erfassen, um somit ein positionsgenaues Wiederaufnehmen des Werkstücks zu ermöglichen. Alternativ ist es auch bekannt, das Werkstück während eines Bearbeitungsprozesses mittels des Manipulators und des Endeffektors zu halten und den Manipulator einer Bewegung des Werkstücks während der Bearbeitung nachzuführen.

Die bekannten Lösungen sind jedoch entweder wenig flexibel oder erfordern eine aufwändige Steuerung und Überwachung durch kosten- und wartungsintensive Sensorik.

Die Erfindung beschäftigt sich mit der Aufgabe, Greifobjekte auf einfach und kostengünstige Weise positionsgenau wieder aufzunehmen.

Diese Aufgabe wird erfindungsgemäß durch ein Verfahren mit den Merkmalen des Anspruchs 1 gelöst. Hierbei handelt es sich um ein Verfahren zum Handhaben eines Greifobjekts, insbesondere Werkstücks, mittels einer Handhabungsanlage. Das Verfahren ist insofern auch ein Verfahren zum Betreiben einer Handhabungsanlage.

Die Handhabungsanlage umfasst einen Endeffektor zum Greifen eines Greifobjekts. Insbesondere umfasst der Endeffektor eine Greifvorrichtung zum Greifen eines Greifobjekts. Die Handhabungsanlage umfasst außerdem einen Manipulator, insbesondere Roboter, zum Verlagern des Endeffektors. Der Endeffektor kann über eine Kopplungseinrichtung mit dem Manipulator verbunden sein. Die Handhabungsanlage umfasst außerdem eine Markierungseinrichtung zum, insbesondere temporären, Markieren des Greifobjekts. Die Handhabungsanlage umfasst außerdem eine Detektionseinrichtung zum Detektieren der Markierung auf dem Greifobjekt. Die Detektionseinrichtung kann eine Erkennungseinrichtung zum Erkennen der Markierung sein. Die Markierungseinrichtung und/oder die Detektionseinrichtung können von dem Manipulator verlagerbar sein. Vorzugsweise sind die Markierungseinrichtung und/oder die Detektionseinrichtung an dem Endeffektor angeordnet.

Weitere optionale Ausgestaltungen und Vorteile der Handhabungsanlage zum Ausführen des erfindungsgemäßen Verfahrens sind nachfolgend unter Bezugnahme auf die Handhabungsanlage als solche beschrieben, sodass zur Vermeidung von Wiederholungen auf untenstehende Offenbarung hierzu verwiesen wird.

Das Verfahren umfasst die folgenden Schritte, insbesondere in der nachfolgend angegebenen Reihenfolge:
- Aufnehmen des Greifobjekts mittels des Endeffektors umfassend das Greifen des Greifobjekts mittels des Endeffektors, insbesondere mittels einer Greifvorrichtung des Endeffektors. Zum Greifen des Greifobjekts kann der Endeffektor beispielsweise von dem Manipulator auf das Greifobjekt aufgesetzt werden und danach eine Greifwirkung des Endeffektors aktiviert werden.
- Markieren des Greifobjekts in einem Markierungsbereich als geometrische Referenz zur Ausrichtung des Endeffektors bei einem Wiederaufnehmen des Greifobjekts. Das Greifobjekt wird insofern lokal markiert. Das Markieren erfolgt mittels der Markierungseinrichtung. Das Markieren kann das Aufbringen einer Markierung oder eines Markierungskörpers auf das Greifobjekt umfassen. Das Markieren kann auch eine Veränderung des Greifobjekts, insbesondere eines Materials des Greifobjekts, umfassen. Das Markieren erfolgt insbesondere nach dem Greifen des Greifobjekts mittels des Endeffektors, vorzugsweise im gegriffenen Zustand des Greifobjekts.
- Ablegen des Greifobjekts an einem Ablageort. Das Ablegen des Greifobjekts umfasst insbesondere das Trennen von Greifobjekt und Endeffektor. Zuvor kann das Greifobjekt nach dem Aufnehmen durch den Endeffektor mittels des Manipulators zu dem Ablageort verlagert worden sein. Insofern kann zwischen dem Aufnehmen des Greifobjektes mittels des Endeffektors und dem Ablegen des Greifobjekts an dem Ablageort eine Verlagerung des Greifobjekts (bzw. des Endeffektors und des damit gegriffenen Greifobjekts) zu dem Ablageort erfolgen. Das Markieren des Greifobjekts kann vor, während und/oder nach der Verlagerung des Greifobjekts erfolgen. Bei dem Ablageort kann es sich beispielsweise um eine Bearbeitungsstation einer Bearbeitungsanlage oder einen Lagerort für das Greifobjekt handeln.
- Wiederaufnehmen des Greifobjekts von dem Ablageort oder von einem davon verschiedenen Aufnahmeort mittels des Endeffektors. Hierzu kann zunächst der Endeffektor mittels des Manipulators (wieder) in die Nähe des Greifobjektes verlagert werden. Sodann wird die zuvor erzeuge Markierung auf dem Greifobjekt mittels der Detektionseinrichtung detektiert und der Endeffektor relativ zu der Markierung, insbesondere parallel zu einer Greifobjektoberfläche, ausgerichtet, insbesondere um das Greifobjekt an der gleichen Position wie beim vorherigen Greifen zu greifen. Das Detektieren und das Ausrichten können zeitlich parallel erfolgen. Das Ausrichten kann derart erfolgen, dass der Endeffektor parallel zu einer Greifobjektoberfläche verlagert wird, bis die Markierung in einer vorgegebenen Relativposition zu dem Endeffektor angeordnet ist. Nach erfolgter Ausrichtung wird das Greifobjekt mittels des Endeffektors, insbesondere einer Greifvorrichtung des Endeffektors, gegriffen.

Bei dem vorgeschlagenen Verfahren erfolgt insofern eine, insbesondere temporäre, Markierung eines Greifobjekts als geometrische Referenz zur positionsgenauen Greifpunktermittlung für die erneute Aufnahme des Greifobjekts. Dies ermöglicht es, auf einfach konstruktive Weise ein Greifobjekt an der gleichen Position erneut aufzugreifen. Das Markieren des Greifobjekts erfolgt insbesondere automatisiert.

Bei dem Greifobjekt kann es sich insbesondere um ein Werkstück handeln.

Der Aufnahmeort kann dem Ablageort entsprechen (bspw. ein Lagerort in einem Greifobjekt-Zwischenlager). Der Aufnahmeort kann auch von dem Ablageort verschieden sein. Beispielsweise kann der Ablageort ein Zufuhrort einer Bearbeitungsmaschine sein und der Aufnahmeort kann ein Ausgabeort der Bearbeitungsmaschine sein.

Zwischen dem Ablegen des Greifobjekts und dem Wiederaufnehmen des Greifobjekts kann ein Arbeitsprozess mit dem Greifobjekt oder ein Bearbeitungsprozess an dem Greifobjekt durchgeführt werden. Insofern kann das Verfahren zwischen dem Ablegen des Greifobjekts an dem Ablageort und dem Wiederaufnehmen des Greifobjekts das Durchführen eines Arbeitsprozesses mit dem Greifobjekt oder das Durchführen eines Bearbeitungsprozesses an dem Greifobjekt umfassen. Das Durchführen des Arbeitsprozesses oder Bearbeitungsprozesses kann das Überführen des Greifobjektes von dem Ablageort zu einem von dem Ablageort verschiedenen Aufnahmeort umfassen.

Das Ausrichten des Endeffektors relativ zu der Markierung umfasst insbesondere das Verschieben des Endeffektors parallel zu einer Greifobjektoberfläche, insbesondere mittels des Manipulators. Vorzugsweise wird beim Ausrichten des Endeffektors der Endeffektor relativ zu dem Greifobjekt, insbesondere parallel zu einer Greifobjektoberfläche, verlagert bis sich die Markierung in einer vorgegebenen Referenzposition relativ zu dem Endeffektor befindet. Die Referenzposition kann insbesondere eine Position an der Markierungseinrichtung sein. Das Detektieren kann insbesondere das Überprüfen, ob die Markierung an der Referenzposition angeordnet ist, umfassen. Insbesondere wird das Ausrichten des Endeffektors beendet, wenn die Detektionseinrichtung detektiert hat, dass die Markierung an der Referenzposition angeordnet ist.

Das Detektieren der Markierung kann auf unterschiedliche Art und Weise erfolgen, insbesondere in Abhängigkeit der Art der Markierung. Das Detektieren der Markierung kann das bildliche Erfassen der Markierung, insbesondere des Greifobjekts, umfassen. Insbesondere kann die Detektionseinrichtung eine Kamera aufweisen. Das Detektieren der Markierung kann auch das geometrische Erfassen oder Vermessen des Greifobjekts umfassen. Das Detektieren der Markierung kann auch das Detektieren eines Magnetfeldes umfassen. Insbesondere kann die Detektionseinrichtung einen Magnetfeldsensor, beispielsweise Hall-Sensor, aufweisen. Das Detektieren der Markierung kann auch das Detektieren einer Temperatur des Greifobjekts, insbesondere eines lokalen Temperaturunterschieds, umfassen. Insbesondere kann die Detektionseinrichtung einen Temperatursensor umfassen, insbesondere Infrarot-Sensor und/oder Wärmebildkamera. Das Detektieren der Markierung kann Kombinationen der vorstehend beschriebenen Detektionsarten umfassen.

Das Detektieren kann ein Abrastern der Greifobjektoberfläche mittels der Detektionseinrichtung umfassen. Dies kann beispielhaft dadurch realisiert sein, dass die Detektionseinrichtung an dem Manipulator, insbesondere an dem Endeffektor, befestigt ist und von dem Manipulator parallel zur Greifobjektoberfläche, insbesondere in einem Raster, verlagert wird.

Die Markierung kann dauerhaft auf dem Greifobjekt verbleiben. Die Markierung kann auch lediglich temporär für eine Markierungszeit auf dem Greifobjekt verbleiben. Die Markierung kann sich nach einer Markierungszeit selbstständig auflösen. Die Markierung kann auch aktiv entfernt oder verändert werden.

Im Rahmen einer vorteilhaften Weiternildung kann die Markierung während des Wiederaufnehmens des Greifobjekts oder nach dem Wiederaufnehmen des Greifobjekts (aktiv) verändert werden, vorzugsweise von dem Greifobjekt entfernt werden. Auf diese Weise kann vermieden werden, dass die Markierung bei einer weiteren Verwendung des Greifobjekts stört. Darüber hinaus ermöglicht es eine solche Ausgestaltung, die Markierung wiederzuverwenden (bspw. bei einer Ausgestaltung der Markierung als Markierungskörper, siehe unten). Das Entfernen der Markierung kann mittels der Markierungseinrichtung erfolgen. Insofern kann die Markierungseinrichtung dazu ausgebildet sein, eine auf dem Greifobjekt aufgebrachte Markierung zu entfernen.

Das Markieren des Greifobjekts kann auf unterschiedliche Art und Weise erfolgen.

Das Markieren kann das, insbesondere temporäre, Aufbringen eines Markierungskörpers auf das Greifobjekt umfassen. Insofern kann die Markierungseinrichtung dazu eingerichtet sein, einen Markierungskörper auf das Greifobjekt aufzubringen. Das Aufbringen des Markierungskörpers kann beispielsweise das Ablegen, Andrücken, Absenken oder Abwerfen eines Markierungskörpers auf das Greifobjekt umfassen. Das Aufbringen des Markierungskörpers kann auch das Aufkleben des Markierungskörpers auf das Greifobjekt, bspw. mittels einer ablösbaren Klebeverbindung, elektrostatischen Anhaftung, oder mittels eines Gecko-Tapes. Eine solche Ausgestaltung ist kostengünstig realisierbar.

Bei einer Ausgestaltung mit Markierungskörper kann der Markierungskörper während oder nach dem Wiederaufnehmen des Greifobjekts wieder von dem Greifobjekt entfernt werden, insbesondere mittels der Markierungseinrichtung. Beispielsweise kann das Wiederaufnehmen des Greifobjekts das Kontaktieren und/oder Greifen des Markierungskörpers umfassen, insbesondere mittels der Markierungseinrichtung, insbesondere gleichzeitig mit einem Greifen des Greifobjekts mittels des Endeffektors. Insbesondere kann der Markierungskörper wiederverwendbar ausgebildet sein. Bei einer Ausgestaltung, bei der der Markierungskörper auf das Greifobjekt aufgeklebt wurde, kann das Entfernen des Markierungskörpers das Abziehen des Markierungskörpers, insbesondere unter Lösen der Klebeverbindung, umfassen.

Im Rahmen einer vorteilhaften Weiterbildung kann der Markierungskörper einen Permanentmagneten umfassen oder von einem Permanentmagnet gebildet sein. Insbesondere kann das Markieren des Greifobjekts das Aufbringen eines Permanentmagneten auf das Greifobjekt umfassen. Dies ist insbesondere bei ferromagnetischen Greifobjekten vorteilhaft. Eine solche Ausgestaltung ist kostengünstig realisierbar und ermöglich auf einfache Weise ein rückstandsloses Entfernen der Markierung. Zudem ist, insbesondere bei ferromagnetischen Greifobjekten, durch die Verwendung eines Permanentmagneten eine sichere und positionsgetreue Halterung der Markierung an dem Greifobjekt begünstigt.

Bei einer Ausgestaltung mit Permanentmagnet kann das Detektieren der Markierung das Detektieren eines von dem Permanentmagneten ausgesendeten Magnetfeldes, insbesondere mittels eines Halls-Sensors, umfassen. Insofern kann die Detektionseinrichtung einen Magnetsensor, insbesondere Hall-Sensor, umfassen. Alternativ oder zusätzlich kann das Detektieren des Permanentmagneten das geometrische Erfassen des Permanentmagneten umfassen.

Alternativ oder zusätzlich kann das Markieren des Greifobjekts das Aufbringen einer, insbesondere von dem Greifobjekt sich farblich unterscheidenden, Farbmarkierung in einem Markierungsbereich des Greifobjekts umfassen. Insofern kann die Markierungseinrichtung dazu ausgebildet sein, eine Farbmarkierung auf das Greifobjekt aufzubringen. Das Aufbringen der Farbmarkierung kann auf unterschiedliche Art und Weise erfolgen. Beispielsweise kann das Aufbringen der Farbmarkierung das Aufbringen eines Farbkörpers oder Farbstreifens auf das Greifobjekt umfassen. Das Aufbringen des Farbkörpers oder Farbstreifens auf das Greifobjekt kann das Aufkleben des Farbkörpers oder Farbstreifens auf das Greifobjekt umfassen, beispielsweise mittels einer ablösbaren Klebeverbindung, elektrostatischen Anhaftung, oder mittels eines Gecko-Tapes. Das optionale Entfernen der Markierung kann dann beispielsweise das Abziehen des Farbkörpers oder Farbstreifens, unter Lösen der Klebeverbindung, umfassen. Der Farbkörper oder Farbstreifen kann auch mittels Magnetkraft an dem Greifobjekt gehaltert sein. Es ist auch denkbar, dass das Aufbringen der Farbmarkierung das Aufmalen oder Aufsprühen einer Farbmenge auf das Greifobjekt umfasst. Das optionale Entfernen der Markierung kann dann beispielsweise das Abwaschen, Abrubbeln oder Abflammen der Farbmenge umfassen.

Wie vorstehend erwähnt, kann das Markieren des Greifobjekts, alternativ oder zusätzlich, das, insbesondere lokale, Verändern einer Eigenschaft des Greifobjekts, insbesondere eines Materials des Greifobjekts, umfassen.

Im Rahmen einer vorteilhaften Weiterbildung kann das Markieren des Greifobjekts das Verändern einer magnetischen Polarisation des Greifobjekts in einem Markierungsbereich des Greifobjekts umfassen. Dies ist insbesondere vorteilhaft, wenn das Greifobjekt aus einem magnetisch polarisierbaren, insbesondere ferromagnetischen, Material hergestellt ist oder zumindest in einem Markierungsbereich ein magnetisch polarisierbares, insbesondere ferromagnetisches, Material umfasst. Insofern kann die Markierungseinrichtung eine Magnetisierungseinrichtung, insbesondere einen Permanentmagnet, umfassen. Das Detektieren der Markierung kann dann beispielsweise das Detektieren eines Magnetfeldes umfassen. Das optionale Verändern oder Entfernen der Markierung kann das Gegen-Magnetisieren, insbesondere Entmagnetisieren, des Markierungsbereichs umfassen. Es ist auch denkbar, dass das Verändern oder Entfernen der Markierung das Erwärmen des Markierungsbereichs über eine Curie-Temperatur des Greifobjekts umfasst.

Alternativ oder zusätzlich kann das Markieren des Greifobjekts das Erwärmen oder Abkühlen des Greifobjekts in einem Markierungsbereich des Greifobjekts umfassen. Insofern kann das Markieren das lokale Einbringen einer Wärmemenge umfassen. Eine solche Ausgestaltung ist besonders kostengünstig und einfach realisierbar. Bei einer solchen Ausgestaltung kann das Detektieren der Markierung das Detektieren eines lokalen Temperaturunterschieds umfassen, insbesondere das Messen einer Oberflächentemperatur des Greifobjekts. Beispielsweise kann die Detektionseinrichtung einen Infrarot-Sensor und/oder eine Wärmebildkamera umfassen.

Die eingangs gestellte Aufgabe wird auch durch eine Handhabungsanlage gemäß Anspruch 11 gelöst. Die Handhabungsanlage ist insbesondere zur Ausführung eines der vorstehend beschriebenen Verfahren ausgebildet. Die vorstehend in Bezug auf das Verfahren beschriebenen optionalen Merkmale und Vorteile der Handhabungsanlage können auch zur Ausgestaltung der Handhabungsanlage gemäß Anspruch 11 dienen. Gleichermaßen können die nachfolgend erläuterten Vorteile und optionalen Merkmale der Handhabungsanlage oder deren Komponenten zur Ausgestaltung des Verfahrens gemäß Anspruch 1 dienen.

Die Handhabungsanlage umfasst einen Endeffektor zum Greifen eines Greifobjekts, einen Manipulator zum Verlagern des Endeffektors, eine Markierungseinrichtung zum, insbesondere temporären, Markieren des Greifobjekts und eine Detektionseinrichtung zum Detektieren der Markierung auf dem Greifobjekt, insbesondere einer Position der Markierung auf dem Greifobjekt.

Der Manipulator kann unterschiedlich ausgebildet sein. Der Manipulator kann als Ein- oder Mehrachssystem ausgebildet sein. Vorzugsweise ist der Manipulator als Roboter ausgebildet.

Der Endeffektor kann unterschiedlich ausgebildet sein. Insbesondere umfasst der Endeffektor eine Greifvorrichtung zum Greifen des Greifobjekts. Der Endeffektor kann eine magnetische Greifvorrichtung, insbesondere Magnetgreifer, umfassen. Der Endeffektor kann eine mechanische Greifvorrichtung, insbesondere Fingergreifer oder Klemme, umfassen. Der Endeffektor kann einen Adhäsionsgreifer, insbesondere Gecko-Greifer, umfassen. Der Endeffektor kann auch einen Passivgreifer umfassen. Vorzugsweise umfasst der Endeffektor eine Unterdruckgreifvorrichtung, insbesondere Sauggreifer, weiter insbesondere Flächensauggreifer. Der Endeffektor kann mehrere Greifvorrichtungen umfassen. Der Endeffektor kann Kombinationen der beschriebenen Greifvorrichtungen umfassen.

Die Handhabungsanlage umfasst insbesondere auch eine Steuereinrichtung zum Ansteuern der Handhabungsanlage. Die Steuereinrichtung wirkt insbesondere mit dem Manipulator, dem Endeffektor, der Markierungseinrichtung und der Detektionseinrichtung zusammen. Vorzugsweise ist die Steuereinrichtung dazu eingerichtet, den Manipulator in Abhängigkeit einer von der Detektionseinrichtung erkannten Position der Markierung anzusteuern.

Insbesondere ist die Steuereinrichtung dazu ausgebildet, eines der vorstehend beschriebenen Verfahren auszuführen. Vorzugsweise weist die Steuereinrichtung eine nicht-flüchtige Datenspeichereinrichtung auf, auf welcher Steuereinweisungen hinterlegt, insbesondere gespeichert, sind, welche, insbesondere bei Ausführung durch eine Datenverarbeitungsanlage der Steuereinrichtung, die Steuereinrichtung dazu veranlassen, eines der vorstehend beschriebenen Verfahren durchzuführen.

Vorzugsweise ist die Markierungseinrichtung und optional die Detektionseinrichtung an dem Endeffektor angeordnet. Endeffektor, Markierungseinrichtung und Detektionseinrichtung können insofern gemeinsam von dem Manipulator verlagerbar sein. Eine solche Ausgestaltung ist besondere kompakt.

Im Rahmen einer vorteilhaften Weiterbildung kann die Markierungseinrichtung dazu ausgebildet sein, einen Markierungskörper auf das Greifobjekt aufzubringen und insbesondere den Markierungskörper wieder von dem Greifobjekt zu entfernen. Bei einer solchen Ausgestaltung kann die Detektionseinrichtung insbesondere zum bildlichen Erfassen des Markierungskörpers ausgebildet sein.

Alternativ oder zusätzlich kann die Markierungseinrichtung dazu ausgebildet sein, einen Permanentmagnet auf das Greifobjekt aufzubringen und insbesondere den Permanentmagnet wieder von dem Greifobjekt zu entfernen. Bei einer solchen Ausgestaltung kann die Detektionseinrichtung insbesondre eine Sensoreinrichtung, insbesondere Hall-Sensor, zum Detektieren eines Magnetfeldes umfassen.

Alternativ oder zusätzlich kann die Markierungseinrichtung dazu ausgebildet sein, eine Farbmarkierung auf das Greifobjekt aufzubringen und insbesondere wieder von dem Greifobjekt zu entfernen. Bei einer solchen Ausgestaltung kann die Detektionseinrichtung insbesondere zum bildlichen Erfassen der Farbmarkierung ausgebildet sein. Im Rahmen einer vorteilhaften Ausgestaltung kann die Markierungseinrichtung dazu ausgebildet sein, einen Farbkörper oder Farbstreifen auf das Greifobjekt aufzubringen, insbesondere aufzukleben. Bei einer solchen Ausgestaltung kann die Markierungseinrichtung optional dazu ausgebildet sein, den Farbkörper oder Farbstreifen von dem Greifobjekt zu entfernen. Die Markierungseinrichtung kann auch dazu ausgebildet sein, eine Farbmenge auf das Greifobjekt aufzubringen, insbesondere aufzumalen oder aufzusprühen. Bei einer solchen Ausgestaltung kann die Markierungseinrichtung optional dazu ausgebildet zu sein, die Farbmenge von dem Greifobjekt zu entfernen, insbesondere die Farbmenge aufzunehmen oder abzuwischen.

Alternativ oder zusätzlich kann die Markierungseinrichtung dazu eingerichtet sein, das Greifobjekt lokal zu erwärmen oder abzukühlen. Beispielsweise kann die Markierungseinrichtung eine hierfür ausgebildete Heizeinrichtung oder Kühleinrichtung umfassen. Bei einer solchen Ausgestaltung kann die Detektionseinrichtung eine Sensoreinrichtung, insbesondere Temperatursensor, zum Detektieren einer Temperatur des Greifobjekts umfassen. Insbesondere kann die Detektionseinrichtung einen Infrarot-Sensor und/oder eine Wärmebildkamera aufweisen.

Die vorstehend genannte Aufgabe wird auch durch einen Endeffektor gemäß Anspruch 13 gelöst. Der Endeffektor umfasst eine Greifvorrichtung zum Greifen eines Greifobjekts und eine Markierungseinrichtung zum Markieren des Greifobjekts.

Vorzugsweise umfasst der Endeffektor auch eine Detektionseinrichtung zum Erkennung der Markierung auf dem Greifobjekt.

Vorzugsweise umfasst der Endeffektor außerdem eine Kopplungseinrichtung, insbesondere Roboterflansch, zum Ankoppeln des Endeffektors an einen Manipulator, insbesondre Roboter.

Die vorstehend im Zusammenhang mit der Handhabungsanlage beschriebenen Vorteile und optionalen Merkmale des Endeffektors, der Markierungseinrichtung und der Detektionseinrichtung können auch zur Ausgestaltung des Endeffektors gemäß Anspruch 13 dienen.

Die Erfindung wird im Folgenden anhand der Figuren näher erläutert.

Es zeigen:
Fig. 1 vereinfachte schematische Darstellung einer Ausgestaltung einer Handhabungsanlage;
Fig. 2 vereinfachte schematische Darstellung einer Ausgestaltung eines Endeffektors;
Fig. 3 Flussdiagramm zur Erläuterung eines beispielhaften Verfahrens zum Handhaben eines Greifobjekts mit der Handhabungsanlage gemäß Fig. 1.

In der nachfolgenden Beschreibung sowie in den Figuren sind für identische oder einander entsprechende Merkmale jeweils dieselben Bezugszeichen verwendet.

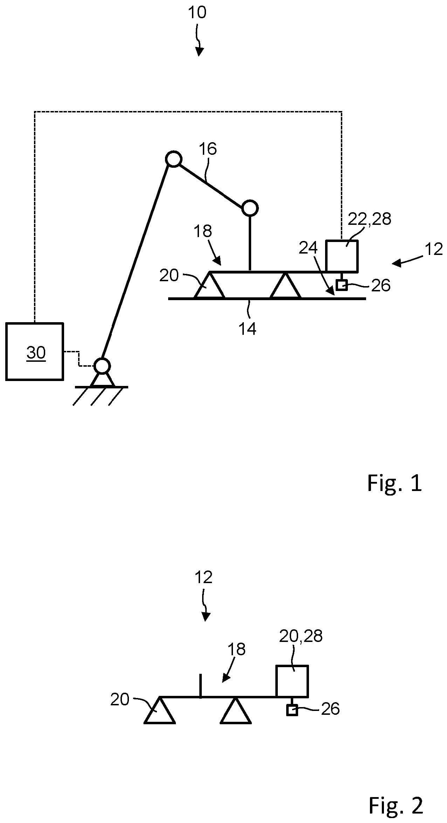

Die Figur 1 zeigt in vereinfachter schematischer Darstellung eine beispielhafte Ausgestaltung einer Handhabungsanlage, welche insgesamt mit dem Bezugszeichen 10 bezeichnet ist.

Die Handhabungsanlage 10 umfasst einen Endeffektor 12 zum Greifen eines Greifobjekts 14 und einen Manipulator 16 zum Verlagern des Endeffektors 12. Der Endeffektor 12 ist mit dem Manipulator 16 verbunden, beispielsweise über eine Kopplungseinrichtung (nicht dargestellt).

Der Endeffektor 12 weist eine Greifvorrichtung 18 auf, welche im Beispiel als Sauggreifer mit einer Mehrzahl von Saugkörpern 20 ausgebildet ist. Bei nicht dargestellten Ausgestaltungen kann der Endeffektor 12 auch beliebige andere Greifvorrichtungen (bspw. magnetische, mechanische oder passive) aufweisen.

Die Handhabungsanlage 10 umfasst außerdem eine Markierungseinrichtung 22 zum Markieren des Greifobjektes 14 in einem Markierungsbereich 24. Im Beispiel ist die Markierungseinrichtung 22 dazu ausgebildet, um einen Markierungskörper 26 auf das Greifobjekt 14 aufzubringen und optional wieder von dem Greifobjekt 14 zu entfernen (nachfolgend noch im Detail erläutert).

Bei dem Markierungskörper 26 kann es sich beispielhaft um einen Farbkörper oder einen Permanentmagneten handeln. Bei nicht dargestellten Ausgestaltungen kann die Markierungseinrichtung 22 auch verschieden ausgebildet sein, bspw. zum Verändern einer magnetischen Polarisation des Greifobjekts 14 in dem Markierungsbereich 24 oder zum Erwärmen oder Abkühlen des Greifobjekts 14 in dem Markierungsbereich 24 (siehe oben).

Die Handhabungsanlage 10 umfasst außerdem eine Detektionseinrichtung 28 (im Beispiel in der Markierungseinrichtung 22 integriert) zum Detektieren der Markierung bzw. der Markierungskörpers 26.

Wie vorstehend erwähnt, kann die Detektionseinrichtung 28 in Abhängigkeit der Ausgestaltung der Markierungseinrichtung 22 unterschiedlich ausgebildet sein. Im dargestellten Beispiel ist die Detektionseinrichtung 28 beispielhaft dazu ausgebildet, den Markierungskörper 26 bildlich zu erfassen.

Beispielhaft und bevorzugt sind die Markierungseinrichtung 22 und die Detektionseinrichtung 28 Teil des Endeffektors 12. Insbesondere können die Markierungseinrichtung 22 und die Detektionseinrichtung 28 an einem Träger der Greifvorrichtung 18 gehaltert sein. Bei nicht dargestellten Ausgestaltungen können die die Markierungseinrichtung 22 und/oder die Detektionseinrichtung 28 von dem Endeffektor 12 separat bereitgestellt sein, bspw. über eine separate Verbindungseinrichtung mit dem Manipulator 16 verbunden sein.

Die Handhabungsanlage 10 umfasst außerdem eine Steuereinrichtung 30, welche dazu ausgebildet ist, den Manipulator 16 anzusteuern. Die Steuereinrichtung 30 ist auch dazu ausgebildet, die Markierungseinrichtung 22 und die Detektionseinrichtung 28 anzusteuern. Die Steuereinrichtung 30 ist insbesondere auch dazu ausgebildet, die Greifvorrichtung 18 anzusteuern. Wie vorstehend erwähnt, umfasst die Steuereinrichtung 24 vorzugsweise eine nicht-flüchtige Datenspeichereinrichtung (nicht dargestellt), auf welcher Steueranweisungen für die Steuereinrichtung 30 hinterlegt sind.

Der Manipulator 16 (in Figur 1 lediglich schematisch dargestellt) ist vorzugsweise als Roboter ausgebildet. Beispielsweise kann der Manipulator 16 ein 6-Achs-Roboter sein. Es ist auch möglich, dass der Manipulator 16 lediglich eine angetriebene Achse, bspw. Linearachse, aufweist.

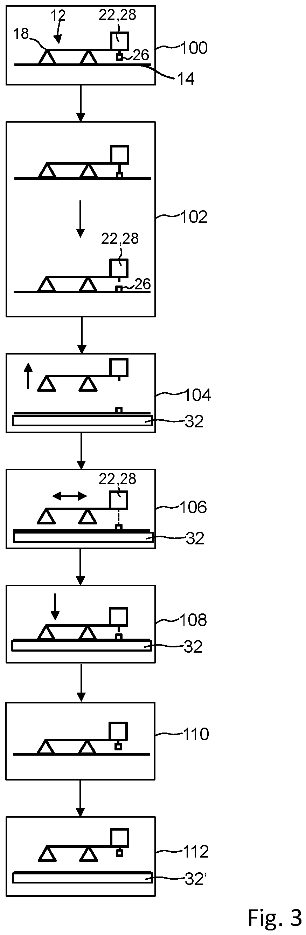

Im Folgenden wird unter Bezugnahme auf die Figur 3 ein beispielhaftes Verfahren zum Handhaben eines Greifobjekts 14 mittels der Handhabungsanlage 10 beschrieben. Das Verfahren ist aber nicht auf die konkrete Ausgestaltung der Handhabungsanlage 10 gemäß Figur 1 beschränkt.

In einem ersten Schritt (Block 100 in Figur 3) wird das Greifobjekt 14 mittels der Greifvorrichtung 18 gegriffen, bspw. aus einem Lagerort des Greifobjekts 14. Zu diesem Zweck kann die Greifvorrichtung 18 mittels des Manipulators 16 auf das Greifobjekt 14 aufgesetzt werden und sodann das Greifobjekt 14 über die Saugkörper 20 angesaugt werden (in Fig. 3 nicht gesondert dargestellt).

In einem weiteren Schritt (Block 102 in Figur 3) wird das Greifobjekt 14 - im durch die Greifvorrichtung 18 gegriffenen Zustand - mittels der Markierungseinrichtung 22 markiert. Im Beispiel setzt hierzu die Markierungseinrichtung 22 den Markierungskörper 26 auf dem Greifobjekt 14 ab.

Sodann wird das Greifobjekt 14 an einem gewünschten Ablageort 32, beispielsweise einem Lagerort oder eine Bearbeitungsstation einer Bearbeitungsmaschine, abgesetzt und der Endeffektor 12 bzw. die Greifvorrichtung 18 von dem Greifobjekt 14 getrennt (Block 104 in Figur 3). Wie in Block 106 in Figur 2 angedeutet kann der Manipulator 16 nun optional von dem Ablageort 30 wegfahren, bspw. um einen weiteren Endeffektor 12 anzukoppeln. Der Markierungskörper 26 verbleibt gemeinsam mit dem Greifobjekt 14 am Ablageort 32.

Soll das Greifobjekt 14 wieder aufgenommen werden, wird der Endeffektor 12 wieder an den Ablageort 30 gefahren und der Endeffektor 12 relativ zu dem Markierungskörper 26 ausgerichtet (Block 106 in Figur 3). Im Beispiel wird der Endeffektor 12 derart ausgerichtet, dass die Markierungseinrichtung 22 wieder über dem Markierungskörper 26 positioniert ist. Wie vorstehend erwähnt, kann der Endeffektor 12 zum Ausrichten parallel zur Greifobjektoberfläche verlagert werden (in Block 106 durch den Doppelpfeil beispielhaft dargestellt) und dabei eine Position des Markierungskörpers 26 mittels der Detektionseinrichtung 28 detektiert werden.

Ist der Endeffektor 12 derart ausgerichtet, dass sich der Markierungskörper 26 in einer bestimmten Referenzposition relativ zu dem Endeffektor 12 befindet (im Beispiel unterhalb der Markierungseinrichtung 22), wird der Endeffektor 12 wieder auf das Greifobjekt 14 abgesetzt und das Greifobjekt mittels der Greifvorrichtung 18 gegriffen (Block 108 in Figur 3).

In einem optionalen weiteren Schritt (Block 110 in Figur 3) wird sodann die Markierung wieder von dem Greifobjekt 14 entfernt. Im Beispiel wird hierzu der Markierungskörper 26 wieder von der Markierungseinrichtung 22 aufgenommen. Der Markierungskörper 26 kann für einen weiteren Greifvorgang wiederverwendet werden.

Sodann kann der Endeffektor 12 (und das damit gehaltene Greifobjekt 14) von dem Manipulator 16 zu einem weiteren Ablageort 32' (z.B. einem weiteren Lagerort oder zu einer Bearbeitungsmaschine) verlagert und dort abgelegt werden (Block 114 in Figur 2).

Das Entfernen des Markierungskörpers 26 in Schritt 110 kann auch während einer Verlagerung des Endeffektors 12 zu dem weiteren Ablageort 32' erfolgen oder nach dem Ablegen des Greifobjekts 14 an dem weiteren Ablageort 32'.

Bei dem vorstehend beispielhaft skizzierten Verfahren sind der Ablageort 32, an welchem das Greifobjekt 14 in Schritt 104 abgelegt wird, und der Aufnahmeort, an welchem das Greifobjekt in Schritt 108 wieder gegriffen wird, identisch. Der Ablageort 30 ist also gleichzeitig ein Aufnahmeort. Wie vorstehend erwähnt, kann der Aufnahmeort aber auch von dem Ablageort 32 verschieden sein. Beispielsweise ist es denkbar, dass der Ablageort 32 ein Zufuhrort einer Bearbeitungsmaschine ist und das Greifobjekt 14 nach dem Ablegen an diesem Zufuhrort einem Bearbeitungsprozess unterzogen wird (also in Figur 2 zwischen den Schritten 104 und 106) im Zuge dessen das Greifobjekt 14 an einen von dem Zufuhrort verschiedenen Ausgabeort der Bearbeitungsmaschine verbracht wird. Das Wiederaufnehmen des Greifobjekts 14 kann dann an dem Ausgabeort der Bearbeitungsmaschine erfolgen.

## Patentansprüche

1. Verfahren zum Handhaben eines Greifobjekts (14) mittels einer Handhabungsanlage (10) umfassend
- einen Endeffektor (12) zum Greifen des Greifobjekts (14),
- einen Manipulator (16) zum Verlagern des Endeffektors (12),
- eine Markierungseinrichtung (22) zum, insbesondere temporären, Markieren des Greifobjekts (14), und
- eine Detektionseinrichtung (28) zum Detektieren der Markierung auf dem Greifobjekt (14),
das Verfahren umfassend:
- Aufnehmen des Greifobjekts (14) mittels des Endeffektors (12) umfassend das Greifen des Greifobjekts (14) mittels des Endeffektors (12);
- Markieren des Greifobjekts (14) mittels der Markierungseinrichtung (22);
- Ablegen des Greifobjekts (14) an einem Ablageort (32);
- Wiederaufnehmen des Greifobjekts (14) mittels des Endeffektors (12), umfassend
o Detektieren der Markierung mittels der Detektionseinrichtung (28);
o Ausrichten des Endeffektors (12) relativ zu der Markierung;
o Greifen des Greifobjekts (14) mittels des Endeffektors (12).

2. Verfahren nach Anspruch 1, wobei das Ausrichten des Endeffektors (12) das Verschieben des Endeffektors (12) relativ, insbesondere parallel, zu einer Greifobjektoberfläche umfasst, bis sich die Markierung in einer vorgegebenen Referenzposition relativ zu dem Endeffektor (12) befindet.

3. Verfahren nach Anspruch 1 oder 2, wobei das Detektieren der Markierung das bildliche oder geometrische Erfassen der Markierung umfasst.

4. Verfahren nach einem der vorherigen Ansprüche, außerdem umfassend, insbesondere während oder nach dem Wiederaufnehmen des Greifobjekts: Verändern oder Entfernen der Markierung, insbesondere mittels der Markierungseinrichtung (22).

5. Verfahren nach einem der vorherigen Ansprüche, wobei das Markieren das, insbesondere temporäre, Aufbringen eines Markierungskörpers (26) auf das Greifobjekt (14) umfasst.

6. Verfahren nach einem der vorherigen Ansprüche, wobei das Markieren des Greifobjekts das Aufbringen eines Permanentmagneten auf das Greifobjekt (14) umfasst.

7. Verfahren nach dem vorherigen Anspruch, wobei das Detektieren der Markierung das Detektieren eines von dem Permanentmagneten ausgesendeten Magnetfeldes umfasst, insbesondere mittels eines Magnetfeldsensors, weiter insbesondere mittels eines Hall-Sensors.

8. Verfahren nach einem der vorherigen Ansprüche, wobei das Markieren des Greifobjekts (14) das Aufbringen einer Farbmarkierung auf das Greifobjekt (14) umfasst.

9. Verfahren nach einem der vorherigen Ansprüche, wobei das Greifobjekt (14) aus einem magnetisch polarisierbaren, insbesondere ferromagnetischen, Material hergestellt ist oder zumindest in einem Markierungsbereich (24) ein magnetisch polarisierbares, insbesondere ferromagnetisches, Material umfasst,
wobei das Markieren des Greifobjekts (14) das Verändern einer magnetischen Polarisation des Greifobjekts (14) in dem Markierungsbereich (24) umfasst, insbesondere wobei das Entfernen der Markierung das Gegen-Magnetisieren, insbesondere Entmagnetisieren, des Markierungsbereichs (24) oder das Erwärmen des Markierungsbereichs (24) über eine Curie-Temperatur des Greifobjekts (14) umfasst.

10. Verfahren nach einem der vorherigen Ansprüche, wobei das Markieren des Greifobjekts (14) das Erwärmen oder Abkühlen des Markierungsbereichs (24) des Greifobjekts (14) umfasst, insbesondere wobei das Detektieren der Markierung das Detektieren eines lokalen Temperaturunterschieds des Greifobjekts (14) umfasst, insbesondere mittels eines Infrarot-Sensors oder einer Wärmebildkamera.

11. Handhabungsanlage (10), insbesondere zur Ausführung des Verfahrens nach einem der vorherigen Ansprüche, umfassend
- einen Endeffektor (12) zum Greifen eines Greifobjekts (14) ;
- einen Manipulator (16) zum Verlagern des Endeffektors (12) ;
- eine Markierungseinrichtung (22) zum, insbesondere temporären, Markieren des Greifobjekts (14);
- eine Detektionseinrichtung (28) zum Detektieren der Markierung auf dem Greifobjekt (14); und
- eine Steuereinrichtung (30) zum Ansteuern der Handhabungsanlage (10).

12. Handhabungsanlage (10) nach dem vorherigen Anspruch, wobei die Steuereinrichtung (30) dazu ausgebildet ist, das Verfahren nach einem der vorherigen Ansprüche auszuführen.

13. Endeffektor (12) zur Verwendung in einer Handhabungsanlage, umfassend eine Greifvorrichtung (18), insbesondere Sauggreifer, zum Greifen eines Greifobjekts (14) und eine Markierungseinrichtung (22) zum Markieren des Greifobjekts (14).

14. Endeffektor (12) nach dem vorherigen Anspruch, außerdem umfassend eine Detektionseinrichtung (28) zum Erkennen der Markierung auf dem Greifobjekt (14).

15. Handhabungsanlage (10) nach einem der Ansprüche 11 oder 12 oder Endeffektor (12) nach einem der Ansprüche 13 oder 14,
wobei die Markierungseinrichtung (22) dazu ausgebildet ist, einen Markierungskörper (26) auf das Greifobjekt (14) aufzubringen und insbesondere den Markierungskörper (26) wieder zu entfernen
oder
wobei die Markierungseinrichtung (22) dazu ausgebildet ist, einen Permanentmagnet auf das Greifobjekt (14) aufzubringen, insbesondere wobei die Detektionseinrichtung (28) eine Sensoreinrichtung zum Detektieren eines von dem Permanentmagneten ausgesendeten Magnetfeldes umfasst
oder
wobei die Markierungseinrichtung (22) dazu ausgebildet ist, eine Farbmarkierung auf das Greifobjekt (14) aufzubringen, insbesondere wobei die Detektionseinrichtung (28) eine Kamera zum bildlichen Erfassen der Farbmarkierung umfasst
oder wobei die Markierungseinrichtung (22) dazu eingerichtet ist, das Greifobjekt (14) lokal zu erwärmen oder abzukühlen, insbesondere wobei die Detektionseinrichtung (28) eine Sensoreinrichtung, insbesondere Temperatursensor, zum Detektieren einer Temperatur des Greifobjekts (14) umfasst.
